# FASCICULE DE BREVET EUROPEEN

(11) **EP 0 546 048 B1**
(45) Date de publication et mention de la délivrance du brevet: **30.11.1994**
(21) Numéro de dépôt: 91915937.6
(22) Date de dépôt: 28.08.1991
(51) Int. Cl.: G11C 16/06, G11C 7/00

(54) **PROCEDE ET DISPOSITIF DE MISE A JOUR D'INFORMATIONS DANS UNE MEMOIRE ET LEUR UTILISATION DANS LES CARTES A MEMOIRE**
EIN VERFAHREN UND EINE VORRICHTUNG FÜR SPEICHERUNG DER INFORMATION IN EINEM SPEICHER UND IHRE BENUTZUNG IN SPEICHERKARTEN
METHOD AND DEVICE FOR UPDATING INFORMATION IN A MEMORY AND USE THEREOF IN MEMORY CARDS

(30) Priorité: 31.08.1990 FR 9010858
(43) Date de publication de la demande: 16.06.1993
(73) Titulaire: GEMPLUS CARD INTERNATIONAL, F-13420 Gémenos (FR)
(72) Inventeur: LISIMAQUE, Gilles, Potomac, MD 20854 (US); PARADINAS, Pierre, F-59650 Villeneuve d'Ascq (FR)
(74) Mandataire: Schmit, Christian Norbert Marie
(86) Numéro de dépôt international: FR9100693
(87) Numéro de publication internationale: WO9204716

(56) Documents cités:
- EP-A- 0 340 981
- ELECTRONIQUE RADIO PLANS, No. 511, June 1990, PARIS FR, pages 25-31; P. GUEULLE: "Les mémoires" see page 29, middle column, line 28 - line 35; figure 9

## Description

L'invention se rapporte à l'utilisation des mémoires et a plus particulièrement pour objet un procédé, et le dispositif correspondant, de mise à jour d'informations dans une mémoire et leur utilisation dans les cartes à mémoire. De telles mémoires sont par exemple décrites dans un article intitulé "Les mémoires" ELECTRONIQUE RADIO PLANS, n°511, Juin 1990, Paris, France, pages 25-31.

Dans les cartes à mémoire, permettant la mise à jour des informations qui y sont inscrites, mémoires de type RAM ou EEPROM notamment, par opposition aux mémoires EPROM où les mises à jour par effacement et réenregistrement ne sont pas possibles, un problème important est relatif aux interruptions possibles d'alimentation pendant la mise à jour. En effet, si une interruption de la tension d'alimentation intervient pendant la mise à jour d'une information, l'ancienne valeur de la donnée peut n'avoir été que partiellement effacée ou la nouvelle n'avoir été que partiellement écrite dans la mémoire.

Ce problème existe notamment pour la mise à jour des mémoires d'ordinateurs. Dans ce domaine, des solutions existent. Elles font souvent appel à des alimentations sans coupures, ou à des procédés de gestion particuliers de l'accès à l'information, par logiciel. Par exemple, un tel procédé est décrit dans le document EP-A-0 340 981.

Dans le domaine des cartes à mémoire, de telles solutions ne sont pas applicables car il est impossible de maintenir l'alimentation sans coupure, et, les ressources étant très limitées en taille de programme, la seule solution envisageable est un contrôle a posteriori des données effacées ou écrites, lors de l'application finale pour détecter, puis éventuellement corriger les erreurs.

L'invention a pour objet un procédé, et le dispositif correspondant, de mise à jour d'informations dans une mémoire permettant de garantir que l'information qui doit être mise à jour est dans un état connu, d'avant la mise à jour ou d'après la mise à jour, mais jamais dans un état indéterminé, en utilisant un minimum de ressources, et permettant en conséquence de reprendre une transaction sans ambiguïté quel qu'ait été l'instant d'interruption, en cas d'incident.

Selon l'invention, le procédé de mise à jour d'informations dans une mémoire est déterminé par les caractéristiques de la revendication 1.

L'invention a également pour objet le dispositif destiné à la mise en oeuvre de ce procédé.

L'invention a également pour objet l'utilisation d'un tel procédé et d'un tel dispositif dans les cartes à mémoire.

L'invention sera mieux comprise et d'autres caractéristiques seront mises en évidence à l'aide de la description qui suit en référence aux figures annexées.
Les figures 1 et 2 illustrent respectivement les étapes du procédé de mise à jour et le dispositif destiné à sa mise en oeuvre selon une première variante de réalisation;
Les figures 3 et 4 illustrent respectivement les étapes du procédé de mise à jour, et le dispositif destiné à sa mise en oeuvre selon une seconde variante de réalisation;

Dans une mémoire réenregistrable, mémoire de type EEPROM ou RAM, sauvegarder une opération d'écriture d'une donnée n'est effectué le plus souvent qu'après une remise à zéro préalable de l'emplacement mémoire correspondant. De plus, l'opération d'écriture ne peut généralement être effectuée en une seule fois: l'écriture d'une donnée est effectuée par bits, par octets ou par mots. En conséquence, comme indiqué ci-dessus, la donnée peut n'être que partiellement écrite lorsque, du fait d'une interruption, la suite des opérations nécessaires à l'écriture de la donnée est interrompue. Un tel état pour la donnée incorrecte n'est pas discernable de celui d'une donnée correcte, et l'utilisation d'une telle donnée aberrante dans une application, par exemple à partir d'une carte à mémoire, peut causer de graves préjudices.

Pour résoudre le problème des interruptions possibles en cours de mise à jour d'une mémoire, selon une première caractéristique de l'invention le procédé de mise à jour utilise un indicateur logique caractéristique de la mise à jour et qui n'est lui-même mis à jour qu'après que l'information à actualiser ait été écrite en mémoire puis vérifiée. Ceci permet de garantir l'intégralité de l'information même en cas d'interruption inopinée, tout en permettant si nécessaire une reprise de l'opération avortée.

De plus, selon une deuxième caractéristique de l'invention, afin de ne jamais perdre trace de la donnée antérieure lors d'une mise à jour, toute nouvelle valeur de donnée ne peut être écrite à la même place physique que la valeur qu'elle doit remplacer. Au moins deux emplacements mémoire sont donc utilisés pour une même donnée. Au moment de l'écriture de la nouvelle valeur de la donnée en mémoire, l'un des emplacements contient une valeur qui sera dite dans la suite "valeur en cours garantie", l'autre contient une valeur dite "valeur de travail non garantie".

Selon une première variante, à chaque nouvelle mise à jour est associé un indicateur logique caractérisant la mise à jour. La donnée actualisée, qui n'est pas transférée, est lue à l'emplacement où elle a été écrite. Si plus de deux emplacements mémoire sont utilisés, plusieurs valeurs pourront être des valeurs de type "en cours garanties" et c'est l'ordre dans lequel l'automate qui utilise les données pourra accéder à ces différentes valeurs qui permettra de retrouver la dernière valeur garantie, si besoin est, à la suite d'une interruption.

Pour cela, dans cette première variante décrite plus en détails ci-après, le dispositif met en oeuvre un compteur binaire cyclique sans état indéterminé formant une suite d'indicateurs logiques et un tableau d'emplacements mémoire où sont stockées les informations.

Le compteur binaire cyclique sans état indéterminé est une simple chaîne binaire logique, par exemple, une chaîne de bits dans une mémoire EPROM ou EEPROM, réalisée de façon que lorsqu'un bit passe de l'état vierge appelé arbitrairement "0", à l'état programmé, appelé arbitrairement "1", aucun des autres bits de la chaîne ne soit altéré. A l'inverse, lorsque le compteur doit être remis à zéro, état vierge pour tous les bits, l'ensemble de la chaîne de bits, sans exception, est affecté et tous les bits reviennent ensemble à cet état vierge, tous les bits étant dans un état identique à tout instant lors de cette remise à zéro.

Pour une application à une mémoire dans laquelle il est impossible de mettre à jour seulement un bit d'un octet sans perturber les autres , il est possible d'utiliser une chaîne d'octets comme indicateurs logiques de mise à jour.

Des mémoires permettant de réaliser une telle chaîne binaire logique se trouvent dans le commerce: la fonctionnalité décrite ci-dessus est standard dans la plupart des mémoires EPROM l'effacement simultané étant effectué par une exposition à un rayonnement ultra-violet. cette fonctionnalité existe également sur certaines mémoires EEPROM principalement utilisées dans le domaine de la monétique, fabriquées par SGS THOMSON ou par MOTOROLA, c'est à dire dans la plupart des mémoires particulièrement adaptées aux cartes à mémoire, où chaque bit de chaque octet passe de l'état vierge "0" à l'état programmé "1" sans qu'aucun autre bit de l'octet ne soit altéré.

L'association du compteur binaire cyclique et d'un tableau d'emplacements mémoire pour la donnée nécessitant des mises à jour permet de supprimer l'état indéterminé possible lors des interruptions d'alimentation électrique.

La description détaillée qui suit du procédé de mise à jour selon l'invention précise l'enchaînement des opérations permettant d'aboutir à ce résultat: Soit D0 la valeur d'origine mise en mémoire et soit D1 la valeur de mise à jour de la donnée D. Comme indiqué ci-dessus, la donnée D1 est écrite dans un autre emplacement mémoire que celui où se trouve la valeur d'origine de la donnée: soit E0 l'emplacement mémoire où se trouve la valeur d'origine D0, et soit E1 l'emplacement mémoire où va être stockée la valeur D1. Aucune contrainte n'existe sur la disposition des emplacements mémoire E0 et E1. Dans la suite, ces emplacements apparaissent contigus seulement pour simplifier l'exposé.

Dans un premier exemple on suppose la mémoire réenregistrable: deux emplacements mémoire seulement peuvent être prévus pour une donnée à mettre à jour soient E0 et E1.

Le compteur binaire cyclique est constitué d'indicateurs logiques, des éléments binaires par exemple; Soient b1,...bn les indicateurs logiques constituant le compteur; les seules valeurs possibles pour ces indicateurs sont "0" et "1".

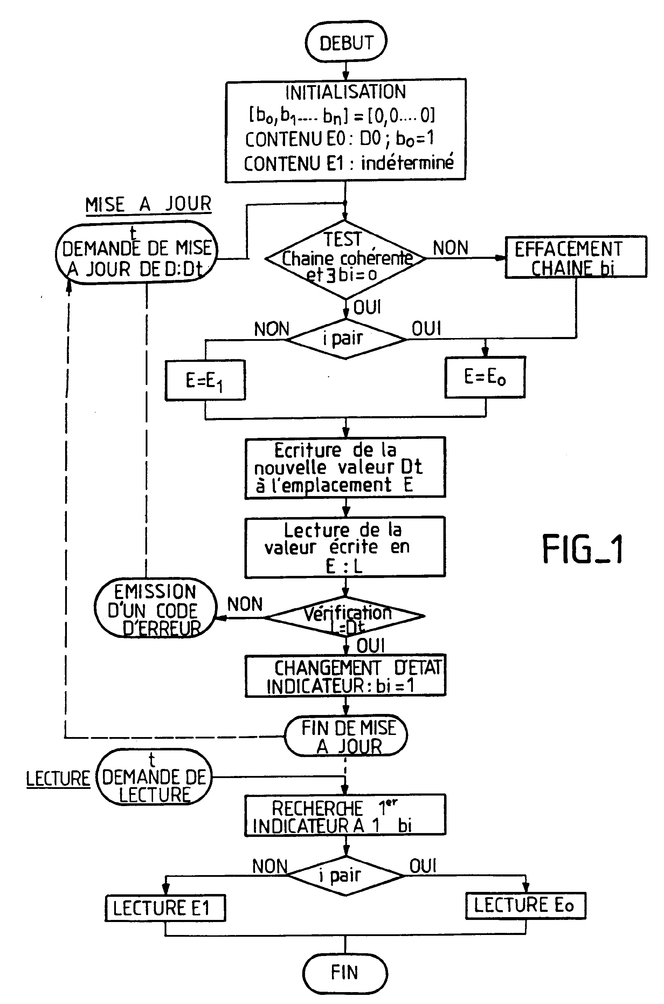

Pour un accès à une information de longueur "N" octets, l'automate fonctionne de la manière suivante décrite en référence à la figure 1. L'état initial de l'automate est tel que :
- b0,...bn = [0,...0]
- E0 contient D0 et b0 est mis à "1";
- E1 a un contenu indéterminé.

Lors d'une demande de mise à jour de la donnée D à un instant t1, l'automate correspondant est appelé.

Le premier octet de D1 est écrit dans le premier octet de E1 à l'instant t1+1, le deuxième octet de D1 dans le deuxième octet de E1 à l'instant t1+2 ..., le Nième octet de D1 dans le Nième octet de E1 à l'instant t1+N.
- à l'instant t1+N+1, l'automate lit la valeur présente à l'emplacement E1,
- à l'instant t1+N+2, la valeur L lue dans l'emplacement E1 est comparée à la valeur D1 de la donnée D à mettre à jour.
- à l'instant t1+N+3 :
   - en cas d'égalité des termes de la comparaison précédente, la mise à jour est terminée et l'automate écrit le premier bit vierge bi, du compteur, soit b1 lors de cette première mise à jour qui passe alors à 1,
   - en cas d'inégalité des termes de la comparaison, l'écriture de la valeur D1 à l'emplacement El s'est mal passée et l'automate retourne un code d'erreur.

Lors de la mise à jour suivante de la même donnée D, la valeur D2 de la donnée sera écrite selon la même procédure à l'emplacement E0 puis vérifiée, le premier bit vierge du compteur dans la suite des bits du compteur étant alors écrit (soit b2, lors de cette deuxième mise à jour), lorsque la valeur D2 écrite a été vérifiée.

Lors de la Iième mise à jour de la même donnée D demandée à l'instant t, la valeur Di de cette donnée sera écrite toujours suivant la même procédure, soit dans E0 si i est pair, soit dans E1 si i est impair, le premier bit vierge du compteur, bi, étant écrit lorsque la valeur écrite Di a été vérifiée.

La chaîne des bits indicateurs [b0, b1...bn] a une longueur n+1. Lorsque l'on arrive à la (n+1)ième mise à jour, la chaîne des indicateurs est entièrement à 1, l'écriture est alors forcée à l'emplacement E0 et la chaîne des indicateurs est effacée en une seule fois, puis b0 est mis à "1" après vérification de la donnée écrite à E0. Le dispositif est alors ramené à un état analogue à l'état initial. Cette opération d'effacement des indicateurs est telle que tous les bits bi sont remis à 0 simultanément par une opération unique du type exposition à un rayonnement ultra violet par exemple.

Pour une lecture de la valeur de la donnée D demandée à un instant t′, l'automate recherche dans la suite des bits du compteur (b0...bn), le dernier bit "bi" à "1": si la valeur de "i" est paire ou nulle, la valeur de la donnée D est lue à l'emplacement E0 et si la valeur de "i" est impaire, la valeur de la donnée D est lue dans E1.

Un tel procédé ne peut donner lors de la lecture qu'une valeur correcte puisque l'intégrité de l'écriture a été validée. Au pire, lorsqu'une mise à jour n'a pu être menée à terme, l'automate lit la valeur écrite lors de la dernière mise à jour correcte, donc éventuellement une valeur non actualisée mais jamais une valeur aberrante.

Bien entendu, il est possible de prévoir un nombre d'emplacements pour la même donnée supérieur à 2, soient E0, E1,...Em, avec m < n, où m+1 est le nombre d'emplacements et n+1 est le nombre de bits du compteur; cela permet d'avoir, comme indiqué ci-dessus, plusieurs valeurs en cours garanties dans les emplacements mémoire utilisés successivement.

Dans les mémoires effaçables type EEPROM, la possibilité d'effacer la mémoire peut être mise à profit pour travailler de façon cyclique sur un ensemble de positions E0, E1, E2...Em: lorsque l'automate détecte que la valeur validée de la donnée mise à jour a été écrite au dernier emplacement mémoire Em, il écrit la valeur suivante à l'emplacement E0: le nombre bi de bits écrits dans le compteur est tel que i = m+1 = 0 modulo (m+1). Pour une telle utilisation cyclique des emplacements mémoire, le compteur binaire permet de retrouver l'emplacement Ek de la dernière valeur correcte en calculant simplement la valeur k = i modulo (m+1), i étant le rang du dernier bit à "1" de la chaîne et en supposant les emplacements écrits dans l'ordre E0, E1...Em.

Une telle structure permet également de mettre à jour des données dans des mémoires non effaçables électriquement telles que des EPROM. Dans ce cas, quand tous les emplacements E0, E1...Em ou quand tous les bits b0, b1, ...bn ont été écrits, il est nécessaire de remplacer la mémoire, par remplacement de la carte portant cette mémoire ou par allocation de nouvelles zones de la mémoire à la mise à jour de cette donnée. Dans ce mode, il est intéressant que le nombre d'emplacements mémoire soit le même que le nombre de bits du compteur.

Le procédé de mise à jour décrit ci-dessus s'applique également à la mise à jour de mémoires où l'opération d'écriture est précédée d'un effacement explicite ou implicite de l'emplacement désigné.

En résumé, si "bi" est le dernier bit à "1" de la chaîne des indicateurs, i étant son rang dans la chaîne, le procédé est tel que l'automate accède en lecture à l'emplacement Ej tel que j = i modulo (m+1) et en écriture à l'emplacement Ej+1. En principe, il n'y a que peu de risques que des bits restent à 1 lors d'un effacement complet de la chaîne après un cycle de n mises à jour. Cependant, si une telle anomalie se produit, par exemple si l'opération d'effacement est interrompue prématurément, il existe un risque d'erreur de l'automate lors de la sélection de l'emplacement à lire. Ce risque peut être supprimé par un simple test de la chaîne car seules les configurations de type: tous les bits bi sont à "0", ou tous les bits précédant le dernier bit bi à 1 sont à 1 sont normales. Toutes les configurations mixtes sont anormales et ne peuvent correspondre qu'à une tentative de mise à zéro de la chaîne d'indicateurs: l'emplacement à lire est alors, dans tous les cas "anormaux", l'emplacement E0.

Le seul cas d'effacement qui ne pourrait être détecté comme anormal alors qu'il est en fait incomplet est le cas où tous les bits à "1" effacés sont à droite d'une chaîne de bits par ailleurs restés à 1, car cette configuration n'est pas "anormale" du point de vue logique et ne peut être détectée par un contrôle de forme de la chaîne.

Pour s'affranchir complètement de tout risque d'erreur, il est possible d'utiliser le même procédé que précédemment pour contrôler l'effacement de la chaîne de bits, c'est à dire un bit indicateur de contrôle, soit Cx associé à la chaîne de bits bi:
- quand la chaîne d'indicateurs est en utilisation normale, Cx reste à l'initial: vierge = "0" par convention,
- quand la chaîne doit être remise à zéro, le bit Cx est mis à l'état "1", ce qui signifie que la chaîne d'indicateurs est dans un état intermédiaire avant remise à zéro. La chaîne est alors effacée, puis son effacement est vérifié et si l'effacement est correct (aucun bit bi à 1), le bit de contrôle associé à la chaîne Cx est remis à "0".

Une telle séquence permet de lever toute indétermination en cas d'interruption intempestive et permet, en cas d'anomalie, de répéter l'opération avortée, un code d'erreur étant retourné par l'automate de mise à jour, dès qu'une opération n'a pu être vérifiée. Ce perfectionnement n'est pas illustré sur la figure 1.

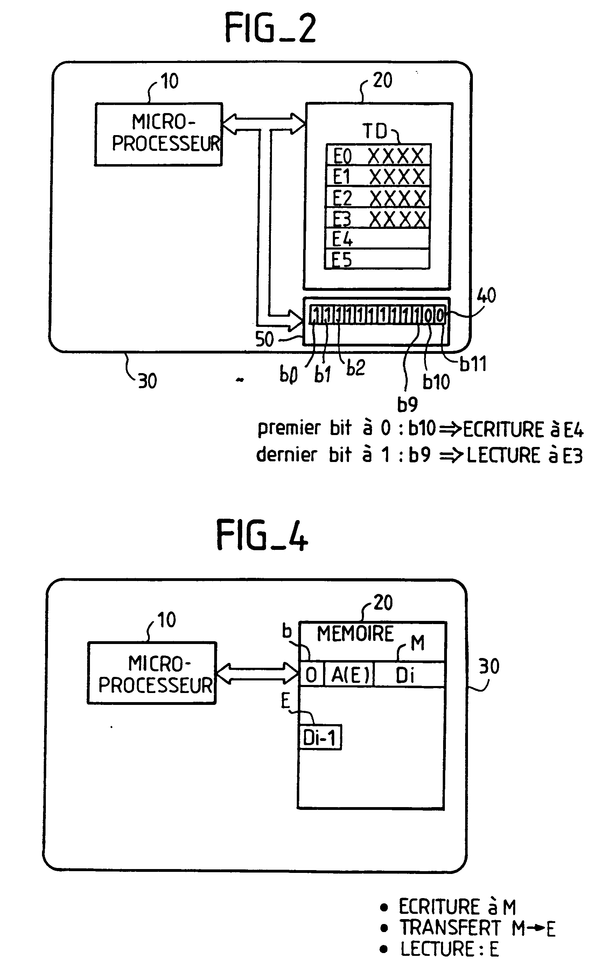

Le dispositif de mise à jour destiné à la mise en oeuvre du procédé décrit ci-dessus est illustré par la figure 2: processeur programmable 10 associé à une mémoire de données 20. Sur cette figure 2 on a supposé que ces éléments, microprocesseur et mémoire , étaient associés sur une carte à mémoire et à microprocesseur, 30. Mais ce microprocesseur peut être dans l'automate destiné à l'application appelée par cette carte, en dehors de la carte. La chaîne d'indicateurs, 40 a été représentée comme partie d'une mémoire 50 indépendante de la mémoire 20. Elle peut également être partie de la mémoire 20 pourvu que cette mémoire possède la fonctionnalité décrite ci-dessus. La procédure est alors commandée par un logiciel effectuant les étapes du procédé décrites ci-dessus et prévu à cet effet dans le microprocesseur. Mais l'automate de mise à jour peut également être réalisé à l'aide de circuits spécialisés effectuant les opérations élémentaires décrites ci-dessus. Ces deux modes de réalisation sont à la portée de l'homme de l'art.

Sur la figure 2, la mémoire 20 a été illustrée avec un tableau d'emplacements mémoire TD [E0, E1,...E5], soit m=5 et la chaîne d'indicateurs, 40, avec 12 indicateurs (b0,b1,... ,b11). Dans l'exemple illustré où [b0, b1, ...,b9] sont à "1" et [b10, b11] à "0", si une demande de lecture intervient la donnée sera lue à l'emplacement E3 et si une demande de mise à jour intervient, la donnée sera écrite à l'emplacement E4. Comme indiqué ci-dessus, il n'y a pas dans cette première variante de transfert de donnée, la contrepartie étant que la donnée doit être lue à l'emplacement ad-hoc à la suite d'un test sur les bits indicateurs.

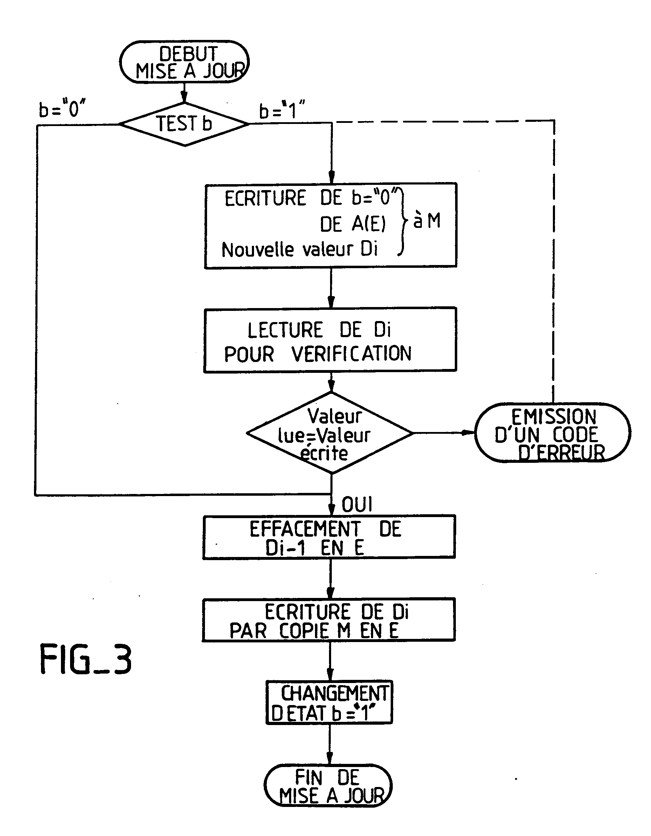

Une variante de la présente invention met en oeuvre également deux emplacements mémoire, mais, pour que la donnée soit toujours lue au même emplacement mémoire E, la valeur de la donnée mise à jour écrite dans un autre emplacement mémoire puis vérifiée, y est ensuite transférée. Le procédé décrit plus en détails ci-après en référence à la figure 3 consiste à effectuer une demande de mise à jour d'une donnée D dont une valeur initiale D0 a été écrite à l'emplacement E par écriture dans un espace mémoire M prévu à cet effet,
- de la valeur D1 de la donnée mise à jour,
- de l'adresse (E) à laquelle elle doit être écrite
- et d'un indicateur dans un état 0 par exemple pour "faux" indiquant que la valeur de la donnée doit être mise à jour. L'indicateur prendra pour valeur "0", une valeur différente de la valeur de l'état initial de la mémoire, la valeur "1" étant elle égale à l'état initial de la mémoire. Si l'application ne nécessite la mise à jour que d'une donnée utilisant cet espace mémoire, il est possible de ne pas mettre en mémoire l'adresse qui est toujours la même et qui est une donnée pour la mise à jour.

L'ensemble de ces informations ayant été écrit dans l'espace mémoire prévu à cet effet, une lecture de cet espace est effectuée pour vérifier les données écrites:
- en cas d'erreur d'écriture ou en cas de coupure, la vérification ne permet pas d'établir la coïncidence et la valeur de la donnée à l'adresse E n'est pas mise à jour. Un code d'erreur est transmis et commande la reprise de l'opération de mise à jour par un nouvel enregistrement;
- en cas de coïncidence, la donnée présente dans l'espace mémoire est recopiée à l'adresse associée, c'est à dire à l'emplacement E.

Pour cela l'automate d'exploitation de la carte effectue, de façon transparente pour l'utilisateur la suite des opérations suivantes, illustrée par la figure 3 :
- dans une première étape l'état de l'indicateur b est détecté:
- si l'indicateur est à "1" ("vrai"), il n'y a pas de mise à jour à faire ni de mise à jour incomplètement réalisée, et la valeur de la donnée utile peut être lue à son adresse E.
- si l'indicateur est à "0" ("faux"), il y a une mise à jour en cours ou une mise à jour à effectuer et la suite de cette mise à jour est faite de manière suivante :
- effacement de la valeur de la donnée D présente à l'emplacement E;
- écriture de la donnée D1, présente dans l'espace mémoire M où elle a été vérifiée, à l'emplacement E,
- positionnement de l'indicateur à 1 ("vrai") indiquant que la mise à jour en cours est terminée et que la valeur de la donnée D à son adresse E est une valeur garantie.

Cette variante permet également d'avoir, dans la mémoire utile pour l'application gérée par la carte, des données toujours cohérentes. En effet, après acceptation par la carte de l'ordre de mise à jour, le procédé décrit ci-dessus permet de conserver l'intégrité des données. Si la dernière partie de la séquence relative au transfert de la donnée à son emplacement mémoire définitif est interrompue, par exemple du fait d'une coupure d'alimentation, lors du rétablissement de l'alimentation, la séquence sera reprise car l'indicateur est toujours en position "0" (faux) et marque une mise à jour à faire ou non terminée, la nouvelle valeur étant dans l'espace mémoire non accessible en lecture. Le dispositif dispose toujours d'une valeur cohérente puisque la valeur ancienne n'est jamais effacée sans que le système connaisse la valeur nouvelle, et la valeur actualisée finit toujours par être transférée avant une lecture.

Comme dans la première variante décrite ci-dessus, pour cette deuxième variante le dispositif illustré par la figure 4 est tel que lorsque la mémoire est associée à un microprocesseur, par exemple dans l'application aux cartes (30) à mémoire (20) et à microprocesseur (10), l'automate peut être réalisé par logiciel et être présent dans le masque du microprocesseur. Il peut également être réalisé par des circuits spécifiques, l'automate alors réalisé prenant le contrôle sur le programme du processeur pour réaliser cette séquence de mise à jour.

Mais le dispositif peut également être implanté sur des composants mémoire simples, n'utilisant qu'une logique câblée (PLA). C'est alors un circuit couplé aux entrées de commande de lecture et d'écriture de la mémoire.

L'invention n'est pas limitée aux deux variantes précisément décrites ci-dessus: elle s'applique à la mise à jour d'un mot mémoire mais elle peut s'appliquer à la mise à jour d'une zone mémoire de dimension plus petite, ou au contraire à un ensemble plus large de plusieurs "unités" de mémorisation, mots ou octets Dans tous les cas la nouvelle valeur de la donnée est écrite dans un emplacement mémoire différent de celui où est disponible la valeur précédente cette valeur étant vérifiée avant de pouvoir remplacer dans l'application l'ancienne valeur, un indicateur logique changeant d'état pour marquer la fin de la mise à jour et l'accessibilité en lecture à la nouvelle valeur.

## Revendications

1. Procédé de mise à jour d'informations dans une mémoire, comportant les étapes suivantes :
- une valeur (D0) initiale ou précédente d'information a été écrite dans la mémoire à un premier emplacement mémoire (E0),
- dans une première étape, l'écriture de la nouvelle valeur (D1) est effectuée dans la mémoire à un autre emplacement mémoire (E1), et est associée à une chaîne d'indicateurs logiques initialement dans un premier état logique et maintenus dans cet état en cours de mise à jour ;
- dans une deuxième étape, une vérification de la nouvelle valeur écrite est effectuée, cette valeur étant garantie en cas de coïncidence avec la valeur dont l'écriture a été commandée et un code d'erreur étant émis en cas de non coïncidence ; et
- dans une étape finale, la fin de la mise à jour commande le passage à un second état logique de l'indicateur logique, la valeur mise à jour étant alors accessible en lecture,
caractérisé en ce que, la mémoire étant effaçable et réenregistrable et comprenant, pour chacune des informations susceptibles de mise à jour, deux emplacements mémoire (E0, E1),
- les emplacements sont écrits alternativement lors des mises à jour successives de l'information,
- chaque écriture d'une nouvelle valeur de l'information entraîne, après sa vérification, le changement d'état du premier bit encore au premier état dans la chaîne ;
- la lecture de la dernière valeur, mise à jour et vérifiée, de l'information est effectuée dans l'un ou l'autre des deux emplacements mémoire selon la parité du rang du dernier bit dans le second état de la chaîne d'indicateurs.

2. Procédé selon la revendication 1, caractérisé en ce que, la mémoire comprenant pour chacune des informations susceptibles de mise à jour un emplacement mémoire (E) dans lequel cette donnée est toujours lue, la valeur initiale ou précédente étant écrite dans cet emplacement, et un autre emplacement mémoire qui n'est utilisé que pour l'écriture des valeurs de mise à jour,
- après la deuxième étape de vérification de la donnée écrite dans l'autre emplacement mémoire, la donnée vérifiée est transférée à l'emplacement (E) où elle sera lue et où elle remplace la valeur précédente.

3. Procédé selon la revendication 2, caractérisé en ce que , l'autre emplacement mémoire destiné à la mise à jour étant utilisé pour différentes informations à mettre à jour, l'écriture de la nouvelle valeur de la donnée dans la première étape est complétée par l'écriture de l'adresse (A(E)) de l'emplacement mémoire (E) dans lequel elle sera transférée.

4. Procédé selon l'une des revendications 2 ou 3, caractérisé en ce que l'indicateur logique associé à l'écriture de la nouvelle valeur est positionné dans le premier état logique au début de la premier étape de la mise à jour en cours.

5. Procédé selon l'une des revendications 1 à 4, caractérisé en ce que
- lorsque la chaîne des indicateurs logiques est entièrement dans le second état, cette chaîne d'indicateurs est ramenée entièrement au premier état en une seule opération d'effacement,
- la mise en mémoire de la valeur de mise à jour de l'information suivant un tel effacement est effectuée au premier emplacement d'un tableau d'emplacements, le premier indicateur logique de la chaîne changeant d'état après vérification de la valeur écrite.

6. Procédé selon la revendication 5, caractérisé en ce que,
- avant l'effacement de la chaîne d'indicateurs logiques, un bit de contrôle initialement dans un premier état, est porté dans un deuxième état ;
- le bit de contrôle est ramené dans le premier état après vérification de l'effacement complet de la chaîne.

7. Dispositif de mise à jour destiné à la mise en oeuvre du procédé selon l'une des revendications précédentes, caractérisé en ce qu'il comporte un automate (10), destiné à commander les différentes étapes de la mise à jour de la mémoire (20) auquel il est associé.

8. Dispositif selon la revendication 7, caractérisé en ce que l'automate est réalisé sous forme logiciel mis en oeuvre par un microprocesseur associé à la mémoire (20) à mettre à jour.

9. Dispositif selon la revendication 7, caractérisé en ce que l'automate est un circuit couplé aux entrées de commande de la mémoire (20).

10. Dispositif selon la revendication 7, caractérisé en ce qu'une chaîne d'indicateurs logiques sans état indéterminé (40), est mise en oeuvre pour la mise à jour d'une information (D), cette chaîne d'indicateurs étant une suite d'éléments binaires sans état indéterminé telle que le changement d'état d'un élément du premier au deuxième état s'effectue sans affecter d'autres éléments, tandis qu'à l'inverse tous les éléments binaires passent du second au premier état ensemble par effacement simultané de la chaîne.

11. Utilisation du procédé de mise à jour selon l'une des revendications 1 à 9 dans une carte à mémoire (30).

12. Utilisation selon la revendication 11, caractérisée en ce que la carte à mémoire comporte un microprocesseur (10), le procédé de mise à jour de l'information dans la mémoire (20) étant mis en oeuvre par un logiciel du microprocesseur (10) de la carte (30).

## Patentansprüche

1. Verfahren zum Aktualisieren von Informationen welches folgende Schritte aufweist:
- ein ursprünglicher oder vorhergehender Informationswert (DO) ist in den Speicher in einem ersten Speicherbereich (E0) eingeschrieben worden,
- in einem ersten Schritt wird das Einschreiben des neuen Wertes (D1) in den Speicher durchgeführt, in einem anderen Speicherbereich (E1), und einer logischen Indikatorkette zugeordnet, die sich ursprünglich in einem ersten logischen Zustand befindet und während des Aktualisierens in dem Zustand gehalten wird,
- in einem zweiten Schritt wird die Überprüfung des neuen eingeschriebenen Wertes durchgeführt, wobei dieser Wert garantiert wird im Falle der Koinzidenz mit dem Wert, dessen Einschreiben gesteuert worden ist und wobei ein Fehlercode abgegeben wird im Fall der fehlenden Koinzidenz,
- in einem Endschritt steuert das Ende des Aktualisierens den Übergang in einen zweiten logischen Zustand des logischen Indikators, so daß der aktualisierte Wert nunmehr durch Auslesen zugänglich ist,
dadurch gekennzeichnet, daß, da der Speicher löschbar und neu beschreibbar ist, und für jede der zu aktualisierenden Informationen zwei Speicherbereiche (E0, E1) aufweist,
- die Speicherbereiche abwechselnd während der aufeinanderfolgenden Akualisierungen der Informationen beschrieben werden,
- jedes Einschreiben eines neuen Informationswertes nach seiner Überprüfung eine Zustandsänderung des ersten Bits bewirkt, der sich noch im ersten Zustand in der Kette befindet,
- das Auslesen des letzten aktualisierten und überprüften Wertes aus einem der beiden Speicherbereiche erfolgt, gemäß der Parität des Ranges des letzten Bits im zweiten Zustand der Indikatorkette.

2. Verfahren nach Anspruch 1, dadurch gekennzeichnet, daß, da der Speicher für jede der zu aktualisierenden Informationen einen Speicherbereich (E) aufweist, aus dem diese Daten ständig gelesen werden und da der ursprüngliche oder vorhergehende Wert in diesen Bereich eingeschrieben ist und ein anderer Speicherbereich nur zum Auslesen der aktualisierten Werte verwendet wird
- nach dem zweiten Überprüfungsschritt der in den anderen Speicherbereich eingeschriebenen Daten, die überprüften Daten in den Bereich (E) übertragen werden, aus dem sie ausgelesen werden, und in dem sie den vorhergehenden Wert ersetzen.

3. Verfahren nach Anspruch 2, dadurch gekennzeichnet, daß, da der andere zu aktualisierende Speicherbereich für verschiedene zu aktualisierende Informationen verwendet wird, das Einschreiben des neuen Wertes der Daten im ersten Schritt vollständig wird durch das Einschreiben der Adresse (A (E)) des Speicherbereichs (E), in den sie übertragen wird.

4. Verfahren nach einem der Ansprüche 2 oder 3, dadurch gekennzeichnet, daß der dem Einschreiben des neuen Wertes zugeordnete logische Indikator in dem ersten logischen Zustand positioniert wird zu Beginn des ersten Schrittes der laufenden Aktualisierung.

5. Verfahren nach einem der Ansprüche 1 bis 4, dadurch gekennzeichnet, daß
- wenn die Kette der logischen Indikatoren sich vollständig im zweiten Zustand befindet, diese Kette der Indikatoren vollständig in einem einzigen Löschschritt in den ersten Zustand überführt wird,
- das Einspeichern des Wertes der aktualisierten Information nach einem derartigen Löschschritt im ersten Bereich einer Bereichstabelle erfolgt, wobei der erste logische Indikator der Kette nach Überprüfung des eingeschriebenen Wertes seinen Zustand ändert.

6. Verfahren nach Anspruch 5, dadurch gekennzeichnet, daß
- vor dem Löschen der Kette der logischen Indikatoren ein Kontrollbit, das sich ursprünglich im ersten Zustand befindet, in einen zweiten Zustand überführt wird,
- der Kontrollbit nach Überprüfung der vollständigen Löschung der Kette in den ersten Zustand zurückgebracht wird.

7. Vorrichtung zur Aktualisierung zur Durchführung des Verfahrens nach einem der vorhergehenden Ansprüche, dadurch gekennzeichnet, daß sie einen Automaten (10) aufweist zur Steuerung der verschiedenen Aktualisierungsschritte des Speichers (20) dem er zugeordnet ist.

8. Vorrichtung nach Anspruch 7, dadurch gekennzeichnet, daß der Automat die Form einer logischen Schaltung aufweist, bestehend aus einem Mikroprozessor, der dem zu aktualisierenen Speicher (20) zugeordnet ist.

9. Vorrichtung nach Anspruch 7, dadurch gekennzeichnet, daß der Automat eine mit den Steuereingängen des Speichers (20) verbundener Schaltkreis ist.

10. Vorrichtung nach Anspruch 7, dadurch gekennzeichnet, daß eine Kette von logischen Indikatoren ohne unbestimmten Zustand (40) für die Aktualisierung von Informationen (D) verwirklicht wird, wobei diese Kette von Indikatoren eine Folge binärer Elemente ohne unbestimmten Zustand ist, so daß die Zustandsänderung eines Elementes vom ersten in den zweiten Zustand ohne die Beeinflussung der anderen Elemente erfolgt, während umgekehrt sämtliche binären Elemente vom zweiten in den ersten Zustand gemeinsam übergehen durch gleichzeitiges Löschen der Kette.

11. Verwendung des Aktualisierungsverfahrens nach einem der Ansprüche 1 bis 9 in einer Speicherkarte (30).

12. Verwendung nach Anspruch 11, dadurch gekennzeichnet, daß die Speicherkarte einen Mikroprozessor (10) aufweist und daß das Verfahren zur Aktualisierung der Information im Speicher (20) mit einer im Mikroprozessor (10) der Karte (30) enthaltenen Software erfolgt.

## Claims

1. Method for updating information in a memory, comprising the following stages:
- an initial or proceeding information value (DO) has been written into the memory from a first memory location (EO);
- in a first stage the writing of the new value (D1) is effected in a different memory location (E1) in the memory and is associated with a chain of logic indicators initially in a first logic state and maintained in this state in the course of the updatings;
- in a second stage a verification of the new written value is carried out, this value being guaranteed in the event of coincidence with the value of which the writing has been affected and an error code being emitted in the event of non-coincidence; and
- in a final stage the end of the updating causes the logic indicator to pass to a second logic state, the update value then being accessible for reading,
characterised by the fact that, the memory being erasable and re-recordable and comprising two memory locations (EO, E1) for each of the items of information capable of being updated,
- the locations are written alternately during successive updates of the information;
- each operation of writing a new value of the information causes after it has been verified the change of state of the first bit still in the first state in the chain;
- the reading of the last value of the information, updated and verified, is effected in one or other of the two memory locations, according to the parity of the range of the last bit in the second state of the chain of indicators.

2. Method according to claim 1, characterised in that, the memory comprising, for each of the items of information capable of being updated, a memory location (E) in which this data is always read, the initial or preceding value being written in this location and another memory location only used for writing the update values,
- while after the second stage of the verification of the data written in the other memory location the data verified is transferred to the location (E), where it will be read and where it replaces the preceding value.

3. Method according to claim 2, characterised in that, the other memory location intended for the update being used for different items of information to be updated, the writing of the new value of the data in the first stage is completed by the writing of the address (A(E)) of the memory location (E) to which it will be transferred.

4. Method according to either of claims 2 or 3, characterised in that the logic indicator associated with the writing of the new value is positioned in the first logic state at the beginning of the first stage of the update in progress.

5. Method according to any one of claims 1 to 4, characterised in that
- when the chain of the logic indicators is entirely in the second state, this chain of indicators is completely returned to the first stage in one single erasure operation;
- the storage of the update value of the information following such an erasure is effected in the first location of a table of locations, the first logic indicator of the chain changing its state after the first verification of the written value.

6. Method according to claim 5, characterised by the fact that
- before the erasure of the chain of logic indicators a check bit initially in a first state is brought to a second state;
- the check bit is returned to the first state after the complete erasure of the chain has been verified.

7. Updating device intended for the implementation of the method according to any one of the preceding claims, characterised by the fact that it comprises an automation system (10) designed for controlling the different stages of the update of the memory (20) with which it is associated.

8. Device according to claim 7, characterised in that the automation system constructed in the form of a software system set in operation by a microprocessor associated with the memory (20) to be updated.

9. Device according to claim 7, characterised in that the automation system is a circuit coupled to the control input of the memory (20).

10. Device according to claim 7, characterised by the fact that a chain of logic indicators without an indeterminate state (40) is operated for the updating of an item of information (D), this chain of indicators being a succession of binary elements without indeterminate state, such that the change of state from an element of the first to the second state is carried out without affecting other elements, while conversely all the binary elements pass from the first state to the second state together by simultaneous erasure of the chain.

11. Use of the updating method according to any one of claims 1 to 9 in a memory card.

12. Use according to claim 11, characterised by the fact that the memory card comprises a microprocessor (10), the method for updating the information in the memory (20) being implemented by a logic system of the microprocessor (10) of the card (30).
